# EUROPEAN PATENT SPECIFICATION

(11) **EP 3 873 764 B1**
(45) Date of publication and mention of the grant of the patent: **23.11.2022**
(21) Application number: 18909264.6
(22) Date of filing: 30.10.2018
(51) Int. Cl.: B60L 53/12, B60L 53/35, B60L 53/38, B60L 53/57, B60L 50/70, B60L 50/75, B60L 53/10, B60L 55/00

(54) **AUTONOMOUS MULTI-PURPOSE UTILITY VEHICLE**
AUTONOMES MEHRZWECKNUTZFAHRZEUG
VÉHICULE UTILITAIRE POLYVALENT AUTONOME

(43) Date of publication of application: 08.09.2021
(73) Proprietor: TOYOTA JIDOSHA KABUSHIKI KAISHA, Toyota-shi, Aichi-ken 471-8571 (JP); Toyota Motor Europe, 1140 Brussels (BE)
(72) Inventor: OHMORI, Shinsuke, 06410 Biot (FR); OKAMACHI, Kazuaki, Aichi Prefecture 471-8571 (JP); SCHEELEN, Patrick, 1930 Zaventem (BE)
(74) Representative: Cabinet Beau de Loménie
(86) International application number: PCT/IB2018/001416
(87) International publication number: WO 2020/089668

(56) References cited:
- DE-A1-102014 220 256
- DE-A1-102016 217 615
- KR-B1- 101 828 512
- RU-C1- 2 577 606
- US-A1- 2014 375 272
- US-A1- 2017 174 092
- US-A1- 2018 074 523
- US-B1- 9 592 742

## Description

### FIELD OF THE DISCLOSURE

The present disclosure relates to electrically powered vehicles. More particularly, the present disclosure relates to an automated utility vehicle configured to provide on-the-go services, e.g., charging/power replenishment, to electrically powered vehicles.

### BACKGROUND OF THE DISCLOSURE

Electric vehicles, e.g., battery powered, fuel cell powered, etc., have been increasing in popularity due to many factors including reduced emissions output and operating cost reductions.

Similar to vehicles that run on hydrocarbon based fuels, electric vehicles require replenishment of a power provider, e.g., recharging of a battery, resupply of hydrogen or other gas, etc. The power supply in such electric vehicles defines the range over which the vehicle may travel, and this range has to date been relatively limited, causing discomfort, known as "range anxiety" for drivers who fear they may lose motive power before reaching their destination and/or a replenishment station (e.g., a charging station). The concern such a feeling may cause to drivers can be an impediments to adoption of the electric vehicle.

JP2005-210843 discloses a roadside charger system to vehicle power supply and a vehicle-to-vehicle power supply system, whereby a vehicle having surplus power (e.g., obtained from the roadside charger) may supply a vehicle having a power deficit.

US 10,108,202 discloses a peloton navigation technique for a charging vehicle and a vehicle to be charged.

Other technologies to optimize the charging of electric vehicles are further disclosed by documents DE 10 2016 217615 A1, US 9 592 742 B1, DE 10 2014 220256 A1, US 2017/174092 A1, US 2018/074523 A1, US 2014/375272 A1, KR 101 828 512 B1, RU 2 577 606 C1.

### SUMMARY OF THE DISCLOSURE

The inventors have recognized that if electric vehicle usage continues to increase in the future, the number of available chargers, may not keep pace with the increase in charging/replenishment need. New infrastructure to add chargers takes significant time and comes at an elevated cost. These issues may further hinder adoption of the electric vehicle.

In addition, even when power supply is shared between vehicles, such as descried in JP2005-210843, each vehicle is not operated for the purpose of charging but is operated according to a driver's purpose (shopping, leisure, etc.). For this reason, such vehicles may not present sufficient charging functionality/opportunity, and a fixed type station would be necessary. Again, this problem may cause a possible deterrent to adoption of electric vehicles.

It is an object of the present invention to provide a mobile, rechargeable, and self-contained charger that improves charging opportunities for electric powered vehicles, during operation thereof.

According to embodiments of the disclosure, in order to meet the above need, the driverless dedicated replenishment vehicle (DDRV) defined by claim 1 is provided.

By providing such a vehicle, it becomes possible to replenish energy supplies of a plurality of vehicles while those vehicles are in-transit. In addition, because of the autonomous/remote controlled nature of the vehicles, a large number of such vehicles can be deployed and maintained at locations of determined interest based on traffic patterns and electric vehicle use. For example, in cities with a large adoption rate of electric vehicles, a greater number of DDRVs may be deployed.

The DDRV includes a second energy storage device.

The second energy storage device may include one or more batteries.

The second energy storage device includes a second hydrogen storage container.

The power transfer means may be configured to provide electrical energy generated by the fuel cell generator to the one or more vehicles via at least one of a contact charger and a contactless charger.

The contactless charger may include an induction charging device.

The power transfer means may include a connector configured to link with a receiving connector on the one or more vehicles to enable transfer of hydrogen from the DDRV to the one or more vehicles.

A portion of the electrical power generated by the fuel cell may be used for operation of the DDRV.

The data from the one or more vehicles may indicate at least one of available potential energy, a location, a direction of travel, and a travel velocity.

The DDRV may be configured to select at least one of the one or more vehicles as a target vehicle based on energy levels of the of the one or more vehicles, and to autonomously navigate to the target vehicle.

The DDRV may include a transmitter configured to transmit real-time data regarding position and/or surroundings of the DDRV, wherein the command center data may include remote control instructions configured to navigate the DDRV to the replenishment location.

The DDRV may include display means configured to provide information to an area surrounding the DDRV, the information preferably comprising at least one of a road condition warning, a weather update, a current charge availability, and an advertisement.

The DDRV may include a filter configured to reduce airborne particulate in the surrounding atmosphere.

The DDRV may include a Wi-Fi repeater configured to provide Wi-Fi access to the Internet within a zone surrounding the DDRV.

The DDRV may be sized to permit movement between lanes of traffic, preferably, between about 500mm and 700mm wide and 1500mm and 2500mm long.

The DDRV may include image capture means configured to capture real-time images surrounding the DDRV.

The DDRV may include a connector configured to interface with an electrical input of a building such that DDRV may provide electrical power to facilities within the building.

The DDRV may have a power output of between 100 and 300 kilo Watts, between 10 and 30 kilo Watts of which may preferably be used for operating the DDRV.

The DDRV may be configured to automatically return to a base replenishment station upon determination that a power source level of the DDRV is below a threshold value. The returning may be performed via autonomous driving of the DDRV based on a predetermined map of known base replenishment stations.

According to further embodiments of the disclosure, a method for providing power replenishing services to at least one electric vehicle via the DDRV described above, is provided. The method includes receiving state of charge and location information from one or more vehicles, determining, based on the state of charge information and the location information, a target vehicle from the one or more vehicles, navigating to the target vehicle, and replenishing a power storage device of the target vehicle via the power replenishing means.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, serve to explain the principles thereof.

### BRIEF DESCRIPTION OF THE DRAWINGS

The present invention may be better understood and its numerous other objects and advantages will become apparent to those skilled in the art by reference to the accompanying drawing wherein like reference numerals refer to like elements in the following figures and in which :
Fig. 1 is an exemplary representation of a driverless dedicated replenishment vehicle DDRV in operation replenishing a supply of power to an electric vehicle;
Fig. 2A is a first perspective view of an exemplary DDRV according to embodiments of the disclosure;
Fig. 2B is a second perspective view of the exemplary DDRV of Fig. 2A;
Fig. 3A is a first planar view of an exemplary DDRV according to embodiments of the disclosure;
Fig. 3B is a second planar view of the exemplary DDRV of Fig. 3A;
Fig. 4 is a schematic view of an exemplary DDRV according to embodiments of the disclosure;
Fig. 5 is a flowchart of an exemplary method for operating a DDRV according to embodiments of the disclosure; and
Fig. 6 is a schematic representation of a predetermined radius within which a DDRV according to embodiments of the disclosure may be configured to operate.

### DESCRIPTION OF THE EMBODIMENTS

It is intended that embodiments of the present disclosure be configured for replenishing a power supply (e.g. electrical energy, hydrogen gas, etc.) of an electric vehicle 2 during traveling of the electric vehicle 2.

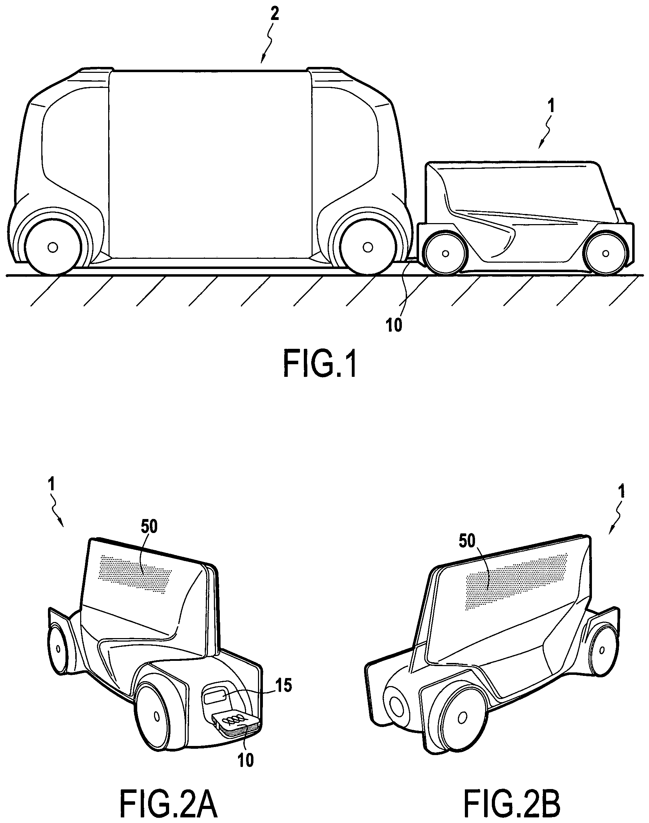

Fig. 1 is an exemplary representation of a driverless dedicated replenishment vehicle (DDRV) 1 in operation, linked and replenishing a supply of power to an electric vehicle 2.

The terms "electric vehicle," "electrically powered vehicle," etc. are intended to refer to a vehicle having electricity as a principle motive power source, regardless of how such electricity is generated/provided. For example, hybrid vehicles, plugin-hybrid vehicles, electric vehicles, fuel cell vehicles, etc., are all considered to fall within the scope of the terms "electric vehicle," "electrically powered vehicle," etc.

According to some embodiments, electric vehicle 2 may include a fuel cell vehicle where the fuel cell is powered by, for example, hydrogen gas. In such a case, electric vehicle 2 may include a hydrogen gas storage container (not shown) configured to store compressed hydrogen gas, e.g., as liquid hydrogen, and this hydrogen provided to a fuel cell for production of electricity via known reactions.

Alternatively, or in addition, electric vehicle 2 includes one or more batteries (not shown) configured to store electrical energy, and to provide such electrical energy to one or more components of electric vehicle 2, for example, motor generators, control units, etc.

Electric vehicle 2 may be any suitable electric vehicle 2 for transporting people, cargo, messages, and the like, for example, and may be driven by an operator, autonomous, or optionally autonomous.

Electric vehicle 2 may be configured to receive a replenishment of a power supply from DDRV 1, via for example, a wired connection, a wireless connection (e.g. an induction charger), a fluid supply fitting (e.g. hydrogen supply line), etc. One of skill in the art will understand that such connections may be present in any location on electric vehicle 2, and that a rear portion of electric vehicle 2 may be, in some embodiments, favored for positioning of such connections.

In addition, for example, where a wireless connection of an induction charger type is to be implemented, electric vehicle 2 may include an induction coil configured to receive an electrical charge from a transmitting induction coil 10 of the DDRV 1.

One of skill in the art will recognize that other general characteristics of electric vehicles 2 are known in the art and further description thereof will not be undertaken herein.

Figure 1 shows an exemplary configuration of an electric vehicle 2 adjustably linked with an exemplary DDRV 1 according to embodiments of the present disclosure. Although the word "linked" is used herein, this should not be interpreted as a physical joining/connection of the two vehicles. While such a link may indicate a physical joining/connection between electric vehicle 2 and DDRV 1, such a link may also include any link enabling a transfer of energy, for example, an inductive link allowing for induction charging.

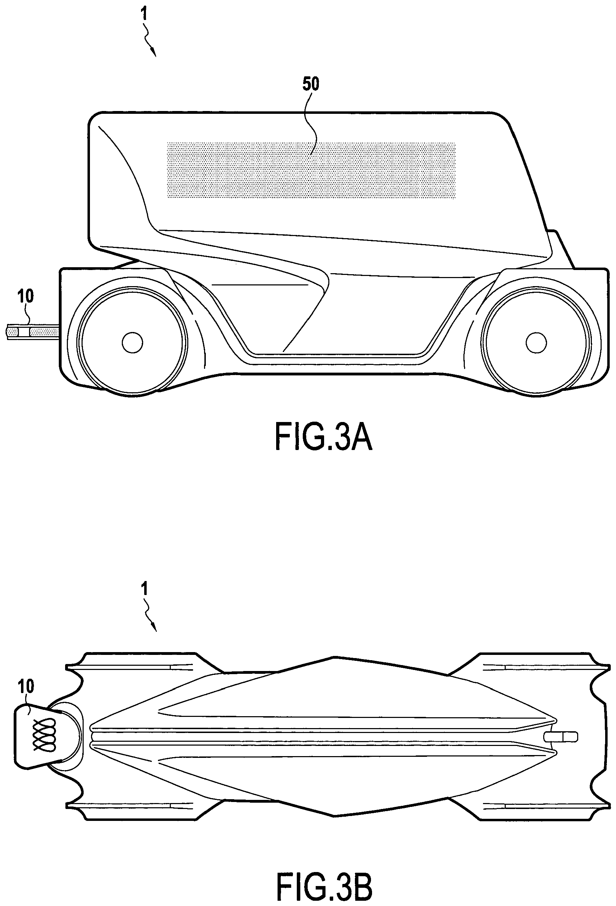

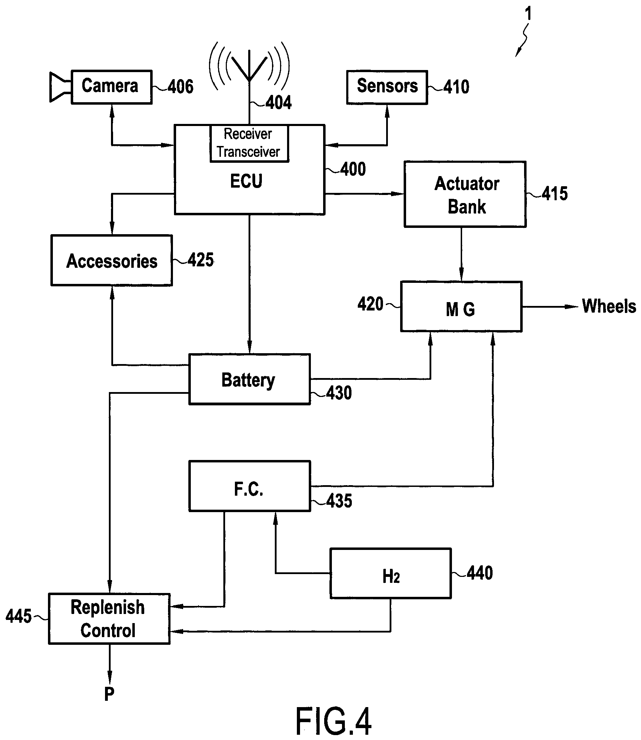

Figures 2A and 2B as well as figures 3A and 3B are various views of an exemplary DDRV 1 according to embodiments of the present disclosure. These figures will be discussed in conjunction with figure 4, which schematically represents an exemplary DDRV 1 according to embodiments of the disclosure.

DDRV 1 may be configured for autonomously driving and navigating, and/or may be remotely controlled from a control center (not shown), where a remote driver may perform driving functions associated with DDRV 1, for example, using visual input relayed from DDRV 1 (e.g. camera 406) and sensor information (e.g. sensors 410) to the control center, and instructions transmitted back to DDRV1 from controls in the control center.

DDRV 1 may be further configured with systems and implements to provide energy replenishing services to one or more electric vehicles 2 in proximity to DDRV 1, as well as additional accessories 425. Additional accessories 425 will be discussed in greater detail below.

DDRV 1 may comprise one or more wheels linked to one or more of motor generators 420 providing motive force for moving and operating DDRV 1 within a desired range. For example, a single motor generator 420 may drive 4 wheels, via a transmission, not shown. One of skill in the art will recognize that DDRV 1 may be provided with additional traction means other than wheels, for example, treads, which may be useful when operating off-road, for example, when powering a remote building.

DDRV 1 may further include an electronic control unit (ECU) 400, one or more sensors 410, one or more image acquisition means 406, one or more actuators 415, and one or more energy transfer means 10, among others.

ECU 400 may be configured to receive information from the one or more sensors 410, image acquisition means 406, and a receiver/transceiver 404, as well as information related to a state of charge of a battery 430, and a level of hydrogen gas stored in storage container 440, among others.

Receiver/transceiver 404 may be configured to receive information (e.g. commands, data, etc.) via wireless services, for example, wireless data services over 3G, 4G, 5G networks, or even Wi-Fi networks, and to provide such information to ECU 400, among others.

In addition to receiving information, receiver/transceiver 404 may be configured to transmit information to, for example, a base station, a command center, and/or one or more electric vehicles in proximity to DDRV 1. Such transfer of information may enable coordination between electric vehicle 2 and DDRV 1 regarding replenishment operations, and/or remote control navigation of DDRV 1, for example.

ECU 400 may comprise one or more processors configured for monitoring and controlling operation of DDRV 1. For example, ECU 400 may include various analog and/or digital circuits, and may include integrated circuits such as RISC processors, i386 processors, ASIC processors, etc. Typically, on-board computers in modern vehicles (i.e., those available as of the filing date of the present application) include such processors, and one of skill will understand that the present ECU 400 may be comprised by such an on-board computer, or may be separately provided, or may even be comprised by a plurality of on-board computers. One of skill in the art will also understand that the exemplary circuits and processors described herein are not intended to be limiting, and that any suitable device may be implemented, for example, analog circuitry.

According to some embodiments DDRV 1 may be configured for autonomous driving and to navigate through traffic autonomously at a determined replenishment location, for example, the location of an electric vehicle 2 having a low state of charge (SOC) and/or a low hydrogen level. Therefore, DDRV 1 may include a navigation controller within ECU 400, or separate from ECU 400, which may be configured to perform driving operations such as issuing commands to actuator bank 415 to cause actuation of a steering mechanism, a braking mechanism, an acceleration mechanism, etc. based on information received from sensors 410, camera 406, a GPS (not shown), among others. For example, sensors 410 may monitor a speed and a direction of DDRV 1 a camera 406 may monitor surroundings of DDRV 1 for obstructions, e.g. pedestrians, other vehicles, road hazards, etc. Sensors 410 and camera 406 may provide this information to ECU 400 such that ECU 400 may issue commands to actuator bank 415 to cause actuation of functions of DDRV1, for example, driving of the motor generator 420 providing power to one or more wheels associated with DDRV 1, turning, braking, acceleration, and evasive maneuvers, among other operations for example.

One of skill in the art will understand that autonomous driving functionality is presently known in the art.

Various automotive manufacturers presently possess navigation controllers enabling autonomous driving of vehicles. Any such navigation controller, autonomous driving controller, etc. is intended to fall within the scope of the present disclosure.

Alternatively, or in addition, ECU 400 may be configured to receive commands via a receiver/transceiver 404, these commands including driving commands which may be issued from a remote operator located in a command center (not shown). For example, within the control center, a display may be provided for the remote operator, the display indicating, for example: speed information, direction information, acceleration information, location information, among others of DDRV 1 received from sensors 410, as well as surroundings information received from camera 406, among others.

In addition, a controller mechanism for example, a joystick, a steering wheel, a pedal set, and other controls commonly found in a standard vehicle may be provided to the remote operator positioned so as to view the display within the remotely located control center.

Based on the information displayed on such a display in the control center the remote operator may issue commands via the controller mechanisms in order to remotely control DDRV 1 to operate within a desired area within a traffic region, or, for example, off road in a separate remote region.

According to some embodiments where both autonomous driving functionality and remote control functionality are enabled for DDRV 1, hybrid operation of DDRV 1 may be possible. For example, DDRV 1 may be enabled to autonomously navigate and travel to a determined replenishment location, and subsequently upon arrival at the determined replenishment location signal to a remote operator to take over control such that remote operator may navigate DDRV 1 into position for replenishment operation of an electric vehicle 2.

Alternatively, DDRV 1 may be navigated via remote control operation by a remote operator to arrive at a determined replenishment location, and subsequently, prior to, or upon linking with an electric vehicle 2 for performing a replenishment operation, may switch over to autonomous operation until completion of the replenishment operation. According to some embodiments, following completion of the replenishment operation, DDRV 1 may continue under autonomous operation or may resume remote control as desired by the remote operator, for example.

DDRV 1 may be sized so as to enable passing between vehicles and/or lanes of traffic during navigation, and such sizing may further be dependent upon the number of energy sources and amount of energy stored on board DDRV 1. For example, DDRV 1 may include a hydrogen storage tank 440, one or more fuel cells 435, and/or one or more batteries 430. Depending on, for example, the amount of energy stored in each of the energy storage devices, and a desired energy output of DDRV 1, DDRV1 may be adapted in size to match the desired components.

According to some embodiments, DDRV 1 may be, for example, between about 500 millimeters and 700 millimeters in width, and 1500 millimeters to 2500 millimeters in length, with a height ranging between about 800 millimeters to 1400 millimeters. For example, according to some embodiments of the present disclosure, DDRV 1 may have a length of 2100 millimeters a width of 660 millimeters, and a height of 1080 millimeters.

DDRV 1 includes a first energy storage device, corresponding to one or more hydrogen storage containers 440, and may also include a second storage device, for example, corresponding to one or more batteries 430.

Battery 430 may comprise for example, a lithium-ion battery, lead sulfur battery, or any other suitable battery configuration known in the art. According to some embodiments a battery 430 may have a power output of between 100 and 300 kilo Watts, with for example, between 10 and 30 kilo Watts available for operating DDRV 1. For example, one or more lithium-ion batteries having a capacity of 60-100 kWh may be provided.

Hydrogen storage containers 440 may be configured to store hydrogen as a gas or liquid, as desired, at least a portion of such hydrogen being converted to electrical energy on board DDRV 1.

According to some embodiments, hydrogen containers such as those found in Toyota's Mirai system of carbon fiber hydrogen storage solutions may be provided. Hydrogen storage containers 440 may feature intelligent monitoring systems to ensure safety even in the event of a crash. In addition, the containers 440 may include three or more layers of varying permeability, rigidity, and impact resistance, enabling improved shock resistance.

According to some embodiments, hydrogen containers 440 may be configured to store hydrogen gas, cryogenic hydrogen, or even a hydrogen slurry of of hydrogen rich liquid.

Where a first and/or second energy storage device corresponds to a hydrogen storage container 440, a fuel cell 435 is provided with DDRV 1 for purposes of converting a portion of hydrogen stored within hydrogen storage container 440 to electrical energy used for driving motor generator 420, among other systems associated with DDRV 1 (e.g. ECU 400, actuators 415, accessories 425, etc.).

Fuel cell 435 may further be configured to generate electric energy for purposes of replenishing operations via for example, replenish control 445, for example, to recharge a battery present on electric vehicle 2. One of skill will recognize that fuel cell 435 may be utilized for providing electricity to any number of external devices, as discussed below.

According to the embodiments of the DDRV defined by claim 1, both a first energy storage device and the second energy storage device comprise one or more hydrogen storage containers 440. In such embodiments, hydrogen associated with the first energy storage device is dedicated for replenishment operations (e.g., generation of electrical energy via a fuel cell for providing to a battery of an electric vehicle 2), while hydrogen of the second energy storage device is dedicated to operations of DDRV 1 (e.g., running of motor generator 420).

Still further, it may be possible, that both a first and second energy storage device comprising hydrogen storage containers may allocate the stored hydrogen to a desired purpose. For example, where first energy storage device has been depleted of hydrogen, but an electric vehicle 2 identified in need of an emergency charge, hydrogen from second energy storage device may be utilized for generation of electric power by fuel cell 435, for providing to the electric vehicle 2.

DDRV 1 may include a replenishment control 445 configured to receive and transfer energy between DDRV 1 and an external target, e.g. electric vehicle 2, or a base charging station (not shown). Replenish control 445 may therefore include one or more connectors to figure to receive and/or transmit power in a contactless or contact manner, as well as one or more valves and/or switches for controlling a flow of energy between DDRV1 and an electric vehicle 2, or a base charging station.

Alternatively, or in addition, replenishment control 445 may include one or more connectors configured to receive, via direct link (i.e. contact) electrical power and/or hydrogen fuel for replenishment of one or more batteries 430 and/or hydrogen storage container 440. One of skill in the art will recognize that replenish control 445 while represented schematically as a block in figure 4, may include any number of connectors desirable for linking and a contactless or contact manner, DDRV 1 with external devices for transmission of energy. Any such connectors are intended to fall within the scope of the present disclosure.

Contactless chargers (e.g. induction type chargers) are known in the art will not be described in detail herein. Likewise, contact type connections both electrical and liquid/gas price connections are also known, and will not be described in detail.

The one or more connectors linked to replenish control 445, as noted above, may be adjustable, and may be configured both to receive power for replenishing a power supply of DDRV 1, and for distributing/transmitting power to an electric vehicle 2.

Replenish control 445 may therefore be configured to control the direction of energy flow between battery 430, fuel cell 435, and hydrogen storage container 440, among others. For example, when DDRV 1 is intended to recharge an electric vehicle 2, replenish control 445 may cause power to be transmitted from fuel cell 435 and/or battery 430 through replenish control 445 to, for example, an induction charger transmitter 10, thereby contactlessly charging an electric vehicle 2 presently aligned for induction charging with DDRV 1 via an induction charger receiver of electric vehicle 2.

Further, replenish control 445 may include an induction type charger receiver 10 installed on DDRV 1 and configured to receive electrical power from an external source (e.g. a base charging station) and DDRV 1, for example, with a switch enabling transfer of the energy to one or more batteries 430, thereby enabling replenishment of the DDRV 1 energy supply.

According to the embodiments, where a fuel cell electric vehicle 2 is intended to be replenished, replenishment control 445 may cause a flow of hydrogen to pass out of hydrogen storage container 440 via one or more connectors and into a hydrogen storage container of electric fuel cell vehicle 2.

Similarly replenishment control 445 may allow a flow of hydrogen to pass from one or more external sources via the one or more connectors and into hydrogen storage container 440, thereby allowing replenishment of a hydrogen supply on board DDRV 1.

One of skill will recognize that replenishment of DDRV 1 using the above noted operations may be performed at, for example, a base charging station, a service station (not shown), or even by another DDRV 1 while traveling, without departing from the scope of the present disclosure.

DDRV 1 may include one or more displays 15 configured to provide information regarding energy available on board the DDRV 1. For example, such information may include the state of charge of one or more batteries 430, and/or a level of hydrogen stored in one or more hydrogen storage containers 440. This may enable a servicing technician or service person at a charging station, a service station, or other location to rapidly cycle through information associated with energy stored on DDRV 1 and determine what type and level of replenishment may be desirable at the present time for the DDRV.

Of course, DDRV may also send information via receiver/transceiver 404 to indicate to a base station type and level of replenishment required, thereby eliminating any intervention by an operator at a base station. Alternatively, or in addition to, a signal may be sent by wired connection to the base station from DDRV 1 indicating the type and level of replenishment to be performed.

DDRV may further include functionality enabling autonomous "docking" with the base station for performing such replenishment. In such cases, DDRV may communicate with the base station via receiver/transceiver 404, for example, to accurately navigate to the docked position.

According to some embodiments, DDRV 1 may include a connector configured interface with an electrical input of a building, thereby allowing DDRV 1 to provide electrical power to facilities within the building. In such a case the building location may correspond to the replenishment location to which DDRV 1 may be navigated. This may be particularly useful in situations such as, for example, a power outage situation or other emergency type situations.

The replenishment of energy sources for vehicles, buildings, and the like, as well as the various other services provided by DDRV 1, may be provided to users on the basis of the subscription (e.g. weekly, monthly, yearly, etc.) or may be provided on an ad hoc basis, for example, as needed and paid by credit card.

For example, where a subscription plan is in place, and a user has subscribed to automatic energy replenishment, such a subscriber need not be concerned about when/how energy will be replenished, DDRV 1 may automatically charge the user's vehicle without notice, on an as-needed basis (e.g., to maintain energy levels at 80 percent or greater for the electric vehicle 2).

DDRV 1 may further be requested by an entity via the Internet, and/or as a result of a request relayed from electric vehicle 2 or another replenishment location via, for example, wireless data services (e.g. 3G, 4G, 5G, etc.).

For example, while an electric vehicle 2 is traveling, an ECU present on electric vehicle 2 may determine that a state of charge of the battery providing power for electric vehicle 2 has been reduced below a predetermined threshold value. An operator of electric vehicle 2 may be subscribed to replenishing services provided by one or more DDRV 1 in the vicinity of electric vehicle 2.

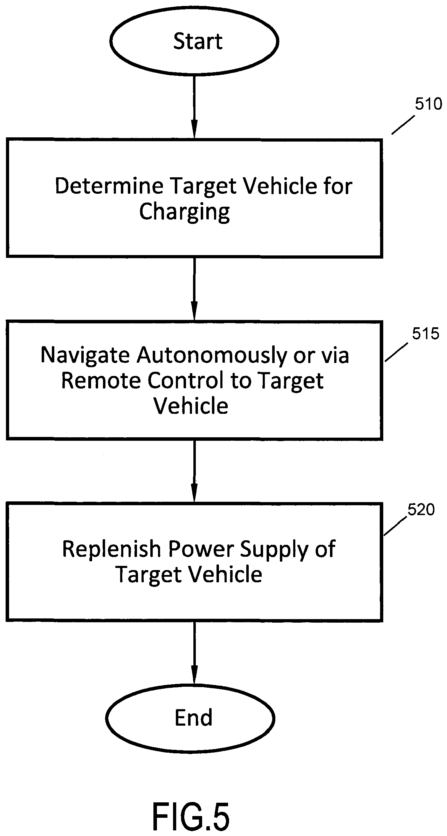

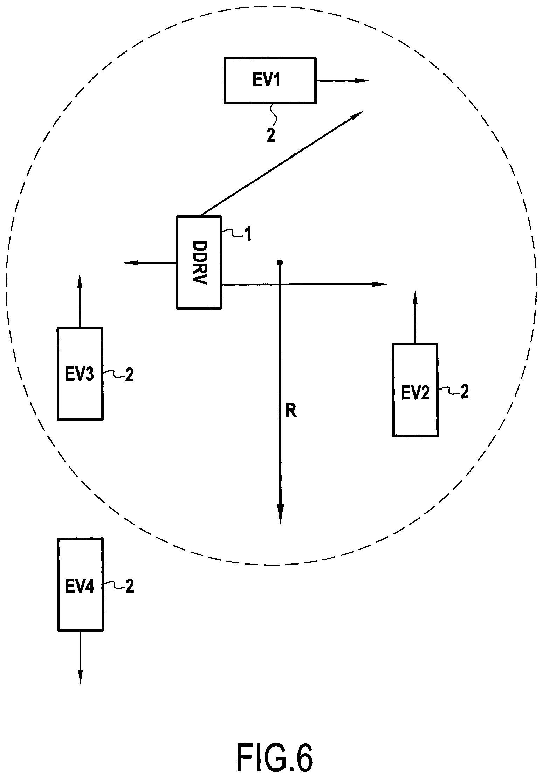

Figure 6 shows an exemplary operating range of a DDRV 1 for purposes of describing embodiments of the present disclosure. In addition figure 5 shows an exemplary flowchart related to determination by a DDRV 1 as to which vehicle a form the basis of the replenishment location for replenishment.

As noted above a DDRV 1 may have a particular operating radius R, within which it may provide services electric vehicles 2, as well as other services (e.g. electrical provision to buildings, advertising, air filtering, Wi-Fi hotspot, etc.). Within such a radius R various electric vehicles 2, in this case EV 1 through EV 4, may be circulating in traffic. One or more of the electric vehicles EV1-EV4 may require a replenishment of energy due to, for example, a low state of charge in a battery or a low hydrogen level, among others.

Any of the one or more electric vehicles EV1-EV4 may then send a signal, for example, to a command center and or a broadcast signal, indicating that replenishment is desirable, and further providing for example, the location as well as travel information (e.g. speed, direction, etc.) enabling a determination of a position of the electric vehicle 2 in the future.

DDRV 1 and/or the command center may then determine which of the electric vehicles within the operating range of DDRV 1 may be most suitable/desirable for charging (step 510). Such a determination may be based on, for example, a state of charge of each one of the electric vehicles EV 1-EV 4, a distance of each one of the electric vehicles from DDRV 1, a predicted distance in the future from DDRV 1, a type of energy requested by the electric vehicles in and associated level of energy available from DDRV 1, etc. an example determination based on figure 6 may be made is follows, EV 1 having a state of charge of approximately 30 percent and traveling away from DDRV 1; EV 2 having a state of charge of approximately 25 percent and traveling toward DDRV 1 but located at a greater distance than EV 3 having a state of charge of 27 percent moving towards DDR the 1; and EV 4 effectively moving away from DDRV 1 and outside of operational range of DDRV 1. In such a case, because EV 3 requires a shorter travel distance and has a similar state of charge to EV 2, while EV 1 has a relatively higher state of charge than either EV 2 or EV 3, it may be determined that EV 3 may be reached more quickly than EV 2 and may be a more effective target vehicle for replenishment by DDRV 1.

Alternatively, such a determination may be based solely on the state of charge of the requesting electric vehicles 2, and therefore EV 2 may be determined to be a target vehicle for replenishment.

Still further, in another alternative, such a determination may be fee and subscription-based whereby, for example, EV 1 pays a premium subscription fee to receive priority replenishment services, and although EV 1 has a higher state of charge than either EV 2 or EV 3, and requires greater travel distance than either of these two electric vehicles, EV 1 becomes the target vehicle for charging.

One of skill will recognize that other means for the determination may be implemented without departing from the scope of the present disclosure. For example, available energy on DDRV 1 may be taken into consideration as well as a distance of DDRV 1, base charging station for replenishing an energy supply to DDRV 1.

Once a determination of a target vehicle is made, or otherwise, a target replenishment location identified, DDRV 1 may be navigated to the replenishment location (515) to perform replenishing services, for example, to EV 1 (step 520).

According to some embodiments, DDRV 1 may be configured to monitor energy levels on board DDRV 1, and upon detection that an energy source level is below a threshold value, DDRV 1 may autonomously return to a base station for replenishment. For example, when one or more batteries 430 on board DDRV 1 have fallen below a state of charge of, for example, 20 percent, DDRV 1 may utilize a GPS-based map for determining a location of the closest base station for replenishment of energy to batteries 430. DDRV 1 may then navigate to the base station using such location information, and replenish the supply of energy to batteries 430.

DDRV 1 may be configured to take into account a distance to the one or more base stations when determining a threshold value associated with an energy level prior to returning to replenish the energy. For example, where DDRV 1 is monitoring a distance from a base station and determines that 10 percent of the remaining energy will be necessary for returning to the base station, DDRV 1 may be configured to buffer by 10 percent the threshold value of remaining energy prior to beginning a return to the base station. Taking the example above, where the threshold value is 20 percent, this value may be buffered 30 percent taking into account the 10 percent required energy for arriving at the base station for replenishing operations.

One of skill will recognize that the above is exemplary only, and other threshold values may be selected based on considerations such as whether rapid charge is available at a base station, whether another DDRV 1 in the area may be called for charging DDRV 1, among others.

According to some embodiments accessories 425 of DDRV 1 may include, for example, one or more displays 50 (e.g., a display 50 on each side panel of DDRV 1) configured to provide information to an area surrounding DDRV 1. For example, display 50 may be used to provide information to surrounding traffic regarding energy available on DDRV 1 similarly to that displayed on display 15.

In addition, the information displayed on display 50 of DDRV 1 may be of a more general nature, for example, a road condition warning, a weather update, and/or an advertisement. For example, DDRV 1 may be navigated to a position where roadworks are about to commence, or the location of an accident, and a display of information on display 50 may provide information regarding the roadworks (e.g. "Roadworks Beginning Next Week") or accident (e.g. "Accident Ahead - Slow Down!").

According to some embodiments, as DDRV 1 circulates through traffic, display 50 may show advertisements, such as, for example, the name and location of a local restaurant, information regarding an upcoming sporting event, etc. Such advertisements may be purchased by various entities on subscription-based or ad hoc plans, for example. Revenue derived from such advertisements may be useful in subsidizing the operation charging and operations associated with DDRV 1, and may also provide a revenue stream to an operating entity.

Advertisements may be targeted based on information derived from for example, nearby mobile phones, particularly where for example, users have opted in to use of their information for receiving such targeted ads. In addition advertisements may be configured remotely via information transfer between receiver/transceiver 404 and the base station (e.g. an advertising server located at the base station or other remote location).

According to some embodiments, accessories 425 may include at least one of a filter configured to reduce airborne particulate, for example. According to some embodiments, as DDRV 1 circulates through heavy traffic area, a filter may be activated, this filter being configured to remove particulate and other pollutants present in the air surrounding DDRV 1. Such a filter may be an active filter and/or a passive filter, and may comprise any suitable filtration mechanism.

According to some embodiments, accessories 425 may include a Wi-Fi repeater and/or Wi-Fi access point, configured to provide Internet access to users within a zone surrounding DDRV 1. For example, DDRV 1 may be configured to receive Internet data access via 3G, 4G, and/or 5G, and provide access to this data via Wi-Fi (e.g. 2.4 gigahertz, 5.8 gigahertz, etc.) link to users surrounding DDRV 1.

Access to such Wi-Fi may be controlled via login credentials, and in such embodiments a subscription may be required in order to have such access. Wi-Fi access may also be provided freely to surrounding users, or combinations of the above. For example, paying subscribers may receive priority access and faster data transfer rates, while free users may receive lower data transfer rates.

Where DDRV 1 is provided with Wi-Fi capabilities, this may also enable positioning of DDRV 1 within an outage or dead zone, for example, where no Internet data access is presently operational (e.g., a disaster zone). This may enable providing access to the Internet for users within this area may require emergency information.

One of skill in the art will recognize upon reading of the present disclosure that functionalities associated with DDRV 1 may be carried out in tandem with other features and functionalities present on DDRV 1. For example, replenishing of an electric vehicle energy supply may be carried out by DDRV 1 while displaying advertisement information on display 50, and possibly even while performing filtering operations using a particulate filter or other suitable device.

Further DDRV 1 may provide electrical energy to a building in a disaster zone while also providing Wi-Fi access to users within a range of the DDRV 1's 1 Wi-Fi signal.

Although the present disclosure herein has been described with reference to particular embodiments, it is to be understood that these embodiments are merely illustrative of the principles and applications of the present disclosure.

Where any standards of national, international, or other standards body are referenced (e.g., ISO, SAE, etc.), such references are intended to refer to the standard as defined by the national or international standards body as of the priority date of the present specification. Any subsequent substantive changes to such standards are not intended to modify the scope and/or definitions of the present disclosure and/or claims.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

It is intended that the specification and examples be considered as exemplary only, with a true scope of the invention being indicated by the following claims.

## Claims

1. A driverless dedicated replenishment vehicle , DDRV (1), comprising:
a fuel cell generator for converting hydrogen gas to electrical energy;
a first energy storage device comprising one or more first hydrogen storage container(s) (440) and being configured to allocate the hydrogen of the first hydrogen storage container(s) to replenishment operations, the replenishment operations including conversion to electrical energy by the fuel cell generator for providing to a battery of an electric vehicle (2);
a receiver configured to receive data from at least one of:
one or more vehicles within a predetermined radius of the DDRV (1), and
a command center;
power transfer means configured for transferring energy from the first energy storage device to an energy supply of the one or more vehicles, and navigation control means configured for guiding the DDRV (1) to a replenishment location based at least in part, on the received data;
the driverless dedicated replenishment vehicle (1) being **characterized in that**:
the replenishment operations further include supply of hydrogen by the driverless dedicated replenishment vehicle (1) to an electric fuel cell vehicle; and
the driverless dedicated replenishment vehicle (1) further comprises:
a second energy storage device comprising one or more second hydrogen storage container(s) (440) and being configured to allocate the hydrogen of the second hydrogen storage container(s) to operations of the driverless dedicated replenishment vehicle (1),
power receiving means configured to enable reloading of hydrogen to the first energy storage device.

2. The DDRV according to claim 1, wherein the power transfer means is configured to provide electrical energy generated by the fuel cell generator to the one or more vehicles via at least one of a contact charger and a contactless charger.

3. The DDRV according to claim 2, wherein the contactless charger comprises an induction charging device.

4. The DDRV according to any of claims 1-3, wherein the power transfer means comprises a connector configured to link with a receiving connector on the one or more vehicles to enable transfer of hydrogen from the DDRV to the one or more vehicles.

5. The DDRV according to any one of claims 1-4, wherein the data from the one or more vehicles indicates at least one of available potential energy, a location, a direction of travel, and a travel velocity.

6. The DDRV according to any of claims 1-5, wherein the DDRV is configured to select at least one of the one or more vehicles as a target vehicle based on energy levels of the of the one or more vehicles, and to autonomously navigate to the target vehicle.

7. The DDRV according to any of claims 1-6, comprising a transmitter configured to transmit real-time data regarding position and/or surroundings of the DDRV, wherein the command center data includes remote control instructions configured to navigate the DDRV to the replenishment location.

8. The DDRV according to any of claims 1-7, comprising display means configured to provide information to an area surrounding the DDRV, the information preferably comprising at least one of a road condition warning, a weather update, a current charge availability, and an advertisement.

9. The DDRV according to any of claims 1-8, comprising a filter configured to reduce airborne particulate in the surrounding atmosphere.

10. The DDRV according to any of claims 1-9, comprising a Wi-Fi repeater configured to provide Wi-Fi access to the Internet within a zone surrounding the DDRV.

11. The DDRV according to any of claims 1-10, wherein the DDRV is sized to permit movement between lanes of traffic, preferably, between about 500mm and 700mm wide and 1500mm and 2500mm long.

12. The DDRV according to any of claims 1-11, comprising image capture means configured to capture real-time images surrounding the DDRV.

13. The DDRV according to any of claims 1-12, comprising a connector configured to interface with an electrical input of a building such that DDRV may provide electrical power to facilities within the building.

14. The DDRV according to any of claims 1-13, having a power output of between 100 and 300 kilo Watts, between 10 and 30 kilo Watts of which are preferably used for operating the DDRV.

15. The DDRV according to any of claims 1-14, wherein the DDRV is configured to automatically return to a base replenishment station upon determination that a power source level of the DDRV is below a threshold value, the returning preferably being performed via autonomous driving of the DDRV based on a predetermined map of known base replenishment stations.

## Patentansprüche

1. Fahrerloses dediziertes Versorgungsfahrzeug, DDRV (1), umfassend:
einen Brennstoffzellen-Generator zum Umwandeln von Wasserstoffgas in elektrische Energie,
eine erste Energiespeichervorrichtung, die einen oder mehrere erste Wasserstoff-Speicherbehälter (440) umfasst und dazu ausgestaltet ist, den Wasserstoff des/der ersten Wasserstoff-Speicherbehälter(s) Versorgungsvorgängen zuzuordnen, wobei die Versorgungsvorgänge die Umwandlung in elektrische Energie durch den Brennstoffzellen-Generator beinhalten, um diese einer Batterie eines elektrischen Fahrzeugs (2) bereitzustellen,
einen Empfänger, der dazu ausgestaltet ist, Daten zu empfangen von zumindest einem von:
einem oder mehreren Fahrzeugen innerhalb eines vorbestimmten Radius des DDRV (1) und
einer Steuerzentrale,
ein Energieübertragungsmittel, das dazu ausgestaltet ist, Energie von der ersten Energiespeichervorrichtung an eine Energieversorgung des einen oder der mehreren Fahrzeuge zu übertragen, und
ein Navigations-Steuerungsmittel, das dazu ausgestaltet ist, das DDRV (1) zumindest zum Teil auf Grundlage der empfangenen Daten zu einer Versorgungsstelle zu leiten,
wobei das fahrerlose dedizierte Versorgungsfahrzeug (1) **dadurch gekennzeichnet ist, dass**:
die Versorgungsvorgänge ferner die Lieferung von Wasserstoff durch das fahrerlose dedizierte Versorgungsfahrzeug (1) an ein elektrisches Fahrzeug mit Brennstoffzelle beinhalten, und
das fahrerlose dedizierte Versorgungsfahrzeug (1) ferner umfasst:
eine zweite Energiespeichervorrichtung, die einen oder mehrere zweite Wasserstoff-Speicherbehälter (440) umfasst und dazu ausgestaltet ist, den Wasserstoff des/der zweiten Wasserstoff-Speicherbehälter(s) Vorgängen des fahrerlosen dedizierten Versorgungsfahrzeugs (1) zuzuordnen,
ein Energieempfangsmittel, das dazu ausgestaltet ist, die Nachfüllung von Wasserstoff in die erste Energiespeichervorrichtung zu ermöglichen.

2. DDRV nach Anspruch 1, wobei das Energieübertragungsmittel dazu ausgestaltet ist, dem einen oder den mehreren Fahrzeugen über zumindest einen von einem Kontakt-Auflader und einem kontaktlosen Auflader elektrische Energie bereitzustellen, die von dem Brennstoffzellen-Generator erzeugt wird.

3. DDRV nach Anspruch 2, wobei der kontaktlose Auflader eine Induktions-Ladevorrichtung umfasst.

4. DDRV nach einem der Ansprüche 1 - 3, wobei das Energieübertragungsmittel einen Verbinder umfasst, der dazu ausgestaltet ist, mit einem Empfangsverbinder an dem einen oder den mehreren Fahrzeugen gekoppelt zu werden, um die Übertragung von Wasserstoff von dem DDRV an das eine oder die mehreren Fahrzeuge zu ermöglichen.

5. DDRV nach einem der Ansprüche 1 - 4, wobei die Daten von dem einen oder den mehreren Fahrzeugen zumindest eines von einer verfügbaren potenziellen Energie, einer Lokalisierung, einer Fahrtrichtung und einer Fahrtgeschwindigkeit angeben.

6. DDRV nach einem der Ansprüche 1 - 5, wobei das DDRV dazu ausgestaltet ist, zumindest eines von dem einen oder den mehreren Fahrzeugen auf Grundlage von Energieniveaus des einen oder der mehreren Fahrzeuge als ein Zielfahrzeug auszuwählen und autonom zu dem Zielfahrzeug zu navigieren.

7. DDRV nach einem der Ansprüche 1 - 6, umfassend einen Sender, der dazu ausgestaltet ist, Echtzeitdaten in Bezug auf die Position und/oder die Umgebung des DDRV zu übertragen, wobei die Steuerzentralen-Daten Fernsteuerungs-Anweisungen beinhalten, die dazu ausgestaltet sind, das DDRV zu der Versorgungsstelle zu navigieren.

8. DDRV nach einem der Ansprüche 1 - 7, umfassend ein Anzeigemittel, das dazu ausgestaltet ist, einem Bereich, der das DDRV umgibt, Informationen bereitzustellen, wobei die Informationen vorzugsweise zumindest eine von einer Straßenzustandswarnung, einer Wetterprognose, einer aktuellen Ladeverfügbarkeit und einer Werbung umfassen.

9. DDRV nach einem der Ansprüche 1 - 8, umfassend einen Filter, der dazu ausgestaltet ist, in der Luft mitgeführtes Partikelmaterial in der umgebenden Atmosphäre zu verringern.

10. DDRV nach einem der Ansprüche 1 - 9, umfassend einen WiFi-Repeater, der dazu ausgestaltet ist, innerhalb einer Zone, die das DDRV umgibt, einen WiFi-Zugang zum Internet bereitzustellen.

11. DDRV nach einem der Ansprüche 1 - 10, wobei das DDRV so dimensioniert, vorzugsweise zwischen etwa 500 mm und 700 mm breit und 1.500 mm und 2.500 mm lang, ist, dass es die Bewegung zwischen Verkehrsspuren erlaubt.

12. DDRV nach einem der Ansprüche 1 - 11, umfassend ein Bilderfassungsmittel, das dazu ausgestaltet ist, Echtzeitbilder um das DDRV herum zu erfassen.

13. DDRV nach einem der Ansprüche 1 - 12, umfassend einen Verbinder, der dazu ausgestaltet ist, eine Schnittstelle mit einem elektrischen Eingang eines Gebäudes zu bilden, so dass das DDRV Einrichtungen innerhalb des Gebäudes elektrische Energie bereitstellen kann.

14. DDRV nach einem der Ansprüche 1 - 13, das einen Energieausgang von zwischen 100 und 300 Kilowatt aufweist, wovon zwischen 10 und 30 Kilowatt vorzugsweise für den Betrieb des DDRV verwendet werden.

15. DDRV nach einem der Ansprüche 1 - 14, wobei das DDRV dazu ausgestaltet ist, nach einer Bestimmung, dass ein Energiequellenniveau des DDRV unter einem Schwellenwert liegt, automatisch zu einer Basis-Versorgungsstation zurückzukehren, wobei das Zurückkehren vorzugsweise durch autonomes Fahren des DDRV auf Grundlage einer vorbestimmten Karte von bekannten Basis-Versorgungsstationen durchgeführt wird.

## Revendications

1. Véhicule de remplissage dédié sans conducteur, DDRV (1), comprenant :
un générateur à pile à combustible destiné à convertir de l'hydrogène gazeux en énergie électrique ;
un premier dispositif de stockage d'énergie comprenant un ou plusieurs premiers réservoirs de stockage d'hydrogène (440) et qui est configuré pour allouer l'hydrogène du ou des premiers réservoirs de stockage d'hydrogène à des opérations de remplissage, les opérations de remplissage comprenant une conversion en énergie électrique par le générateur à pile à combustible pour la fournir à une batterie d'un véhicule électrique (2) ;
un récepteur configuré pour recevoir des données provenant de au moins un de :
un ou plusieurs véhicules dans un rayon prédéterminé du véhicule de remplissage dédié sans conducteur (1), et
un centre de commande ;
des moyens de transfert d'énergie configurés pour transférer de l'énergie depuis le premier dispositif de stockage d'énergie jusqu'à une alimentation en énergie des un ou plusieurs véhicules, et
des moyens de commande de navigation configurés pour guider le véhicule de remplissage dédié sans conducteur (1) jusqu'à un emplacement de remplissage sur la base au moins en partie des données reçues ;
le véhicule de remplissage dédié sans conducteur (1) étant **caractérisé en ce que** :
les opérations de remplissage comprennent en outre le fait de délivrer de l'hydrogène à un véhicule électrique à pile à combustible grâce au véhicule de remplissage dédié sans conducteur (1) ; et
le véhicule de remplissage dédié sans conducteur (1) comprend en outre :
un deuxième dispositif de stockage d'énergie comprenant un ou plusieurs deuxièmes réservoirs de stockage d'hydrogène (440) et qui est configuré pour allouer l'hydrogène du ou des deuxièmes réservoirs de stockage d'hydrogène à des opérations du véhicule de remplissage dédié sans conducteur (1),
des moyens de réception d'énergie configurés pour permettre de recharger en hydrogène le premier dispositif de stockage d'énergie.

2. Véhicule de remplissage dédié sans conducteur selon la revendication 1, dans lequel les moyens de transfert d'énergie sont configurés pour délivrer de l'énergie électrique générée par le générateur à pile à combustible aux un ou plusieurs véhicules par l'intermédiaire de au moins un d'un chargeur à contact et d'un chargeur sans contact.

3. Véhicule de remplissage dédié sans conducteur selon la revendication 2, dans lequel le chargeur sans contact comprend un dispositif de charge à induction.

4. Véhicule de remplissage dédié sans conducteur selon l'une quelconque des revendications 1 à 3, dans lequel les moyens de transfert d'énergie comprennent un connecteur configuré pour réaliser une connexion avec un connecteur de réception sur le(s) un ou plusieurs véhicules pour permettre un transfert de l'hydrogène du véhicule de remplissage dédié sans conducteur au (x) un ou plusieurs véhicules.

5. Véhicule de remplissage dédié sans conducteur selon l'une quelconque des revendications 1 à 4, dans lequel les données du ou des un ou plusieurs véhicules indiquent au moins un d'une énergie potentielle disponible, d'un emplacement, d'une direction de déplacement, et d'une vitesse de déplacement.

6. Véhicule de remplissage dédié sans conducteur selon l'une quelconque des revendications 1 à 5, dans lequel le véhicule de remplissage dédié sans conducteur est configuré pour sélectionner au moins un du ou des un ou plusieurs véhicules comme véhicule de cible sur la base de niveaux d'énergie du ou des un ou plusieurs véhicules, et pour se diriger de manière autonome jusqu'au véhicule de cible.

7. Véhicule de remplissage dédié sans conducteur selon l'une quelconque des revendications 1 à 6, comprenant un émetteur configuré pour transmettre des données en temps réel concernant une position et/ou un environnement du véhicule de remplissage dédié sans conducteur, les données du centre de commande comprenant des instructions de commande à distance configurées pour diriger le véhicule de remplissage dédié sans conducteur jusqu'à l'emplacement de remplissage.

8. Véhicule de remplissage dédié sans conducteur selon l'une quelconque des revendications 1 à 7, comprenant des moyens d'affichage configurés pour fournir de l'information sur une zone entourant le véhicule de remplissage dédié sans conducteur, l'information comprenant de préférence au moins un d'un avertissement sur l'état de la route, d'une mise à jour d'informations météorologiques, d'un niveau de charge actuellement disponible, et d'une publicité.

9. Véhicule de remplissage dédié sans conducteur selon l'une quelconque des revendications 1 à 8, comprenant un filtre configuré pour réduire les particules en suspension dans l'air dans l'atmosphère environnante.

10. Véhicule de remplissage dédié sans conducteur selon l'une quelconque des revendications 1 à 9, comprenant un répétiteur Wi-Fi configuré pour procurer un accès Wi-Fi à l'Internet dans une zone entourant le véhicule de remplissage dédié sans conducteur.

11. Véhicule de remplissage dédié sans conducteur selon l'une quelconque des revendications 1 à 10, dans lequel le véhicule de remplissage dédié sans conducteur est dimensionné, pour permettre un déplacement entre des voies de circulation, de préférence, entre environ 500mm et 700mm de largeur et 1500mm et 2500mm de longueur.

12. Véhicule de remplissage dédié sans conducteur selon l'une quelconque des revendications 1 à 11, comprenant des moyens de capture d'image configurés pour prendre des images en temps réel entourant le véhicule de remplissage dédié sans conducteur.

13. Véhicule de remplissage dédié sans conducteur selon l'une quelconque des revendications 1 à 12, comprenant un connecteur configuré pour assurer l'interface avec un raccordement d'entrée électrique d'un bâtiment de telle sorte qu'un véhicule de remplissage dédié sans conducteur peut fournir de l'énergie électrique à des équipements dans le bâtiment.

14. Véhicule de remplissage dédié sans conducteur selon l'une quelconque des revendications 1 à 13, ayant une puissance de sortie entre 100 et 300 kilowatts, dont entre 10 et 30 kilowatts sont de préférence utilisés pour faire fonctionner le véhicule de remplissage dédié sans conducteur.

15. Véhicule de remplissage dédié sans conducteur selon l'une quelconque des revendications 1 à 14, dans lequel le véhicule de remplissage dédié sans conducteur est configuré pour revenir automatiquement à une station de remplissage de base lors de la détermination qu'un niveau de source d'énergie du véhicule de remplissage dédié sans conducteur est en dessous d'une valeur de seuil, le retour étant de préférence réalisé par l'intermédiaire d'une conduite autonome du véhicule de remplissage dédié sans conducteur sur la base d'une carte prédéterminée de stations de remplissage de base connues.
